# EUROPEAN PATENT APPLICATION

(11) **EP 1 133 125 A1**
(43) Date of publication of application: **12.09.2001**
(21) Application number: 00961219.3
(22) Date of filing: 25.09.2000
(51) Int. Cl.: H04L 27/00

(54) **TRANSMITTING DEVICE AND TRANSMITTING METHOD**

(30) Priority: 29.09.1999 JP 27568899
(71) Applicant: MATSUSHITA ELECTRIC INDUSTRIAL CO., LTD., Kadoma-shi, Osaka 571-8501 (JP)
(72) Inventor: KITAGAWA, Keiichi, Yokosuka-shi, Kanagawa 239-0847 (JP); UESUGI, Mitsuru, Yokosuka-shi, Kanagawa 238-0048 (JP); SAITO, Yoshiko, Yokosuka-shi, Kanagawa 239-0806 (JP)
(74) Representative: Grünecker, Kinkeldey, Stockmair & Schwanhäusser Anwaltssozietät
(86) International application number: JP0006541
(87) International publication number: WO0124468

(57) **Abstract**

A channel variation estimating section 101 estimates a channel variable quantity between a transmitting apparatus 100 and a receiving apparatus 200. A symbol rate determining section 102 determines a symbol rate based on the channel variable quantity, and when the channel variation is considerably fast due to high-speed fading, transmission is carried out after increasing the symbol rate to make the channel variation between symbols or in a burst relatively minute. This makes it possible for the adaptive equalizer to hold sufficient following performance and to maintain communication quality satisfactory without increasing the number of apparatus components even in the case where the channel variation is considerably fast.

## Description

### Technical Field

The present invention relates to a transmitting apparatus and a transmitting method for use in a mobile communication system.

### Background Art

In a mobile communication system, because of arrival of a plurality of transmitted waves at a receiver after being reflected and diffracted and movement of the receiving apparatus itself, amplitude and phase of signals received at the receiver are drastically varied.

In the mobile communication system, it is necessary to compensate for variations in amplitude and phase of received signals at the receiver in order to keep communication quality well. The similar compensation is also required at the time of performing processing such as synchronous detection, delay detection, and the like.

As a method for compensating for variations in amplitude and phase of received signals, there is generally used a method in which variations in amplitude and phase of a channel are estimated by an adaptive equalizer to shape the waveforms of received signals adaptively and to reduce influence of interference between signals.

However, in the case where the channel variation is considerably fast due to high-speed fading, the channel estimation by the adaptive equalizer cannot sufficiently follow the variation in the channel, causing a problem in which an error rate characteristic is deteriorated.

### Disclosure of Invention

It is an object of the present invention is to provide a transmitting apparatus and a transmitting method in which an adaptive equalizer can hold sufficient following performance so that communication quality can be satisfactorily maintain without increasing the number of apparatus components even in the case where the channel variation is considerably fast due to high-speed fading.

This object can be achieved by performing transmission after increasing a symbol rate when the channel variation is considerably fast due to high-speed fading and making the channel variation between symbols or in a burst relatively minute.

### Brief Description of Drawings

FIG. 1 is a block diagram illustrating the configuration of a transmitting apparatus and that of a receiving apparatus according to a first embodiment of the present invention;
FIG. 2A is a view illustrating a frequency band corresponding to a symbol rate;
FIG. 2B is a view illustrating a frequency band corresponding to a symbol rate;
FIG. 3A is a view illustrating the relationship between the symbol rate and a channel variation;
FIG. 3B is a view illustrating the relationship between the symbol rate and a channel variation;
FIG. 4 is a block diagram illustrating the configuration of a transmitting apparatus and that of a receiving apparatus according to a second embodiment of the present invention;
FIG. 5 is a view illustrating the relationship between the symbol rate and a BER characteristic; and
FIG. 6 is a block diagram illustrating the configuration of a transmitting apparatus and that of a receiving apparatus according to a third embodiment of the present invention.

### Best Mode for Carrying Out the Invention

The following will explain embodiments of the present invention with reference to the drawings accompanying herewith.

### (First embodiment)

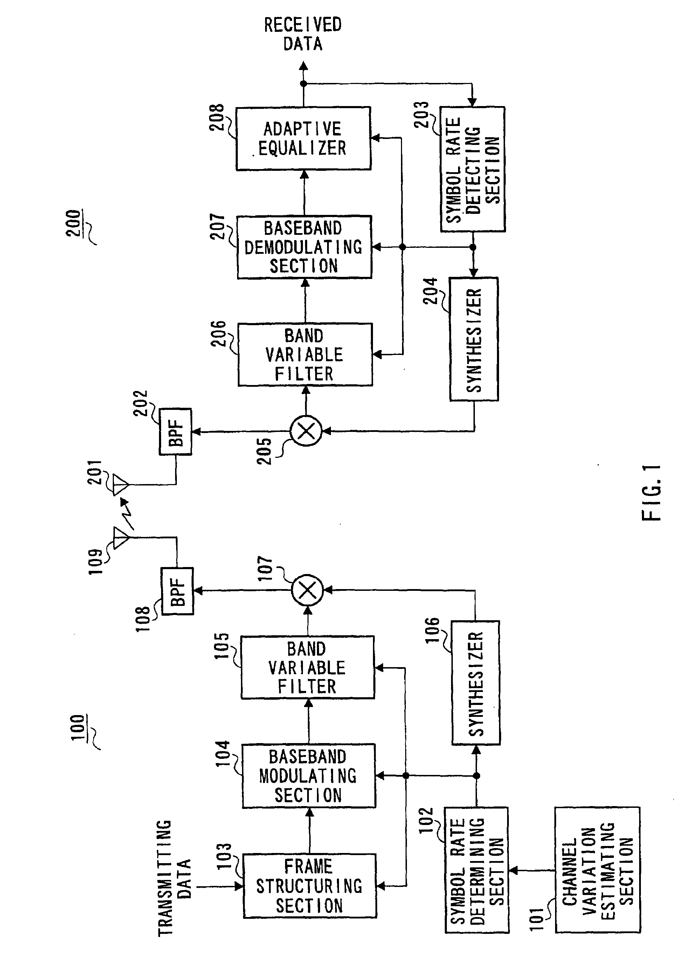

FIG. 1 is a block diagram illustrating the configuration of a transmitting apparatus and that of a receiving apparatus according to a first embodiment of the present invention.

In a transmitting apparatus 100 illustrated in FIG. 1, a channel variation estimating section 101 estimates a channel variation quantity between the transmitting apparatus 100 and a receiving apparatus 200, and outputs an estimated result to a symbol rate determining section 102. It is noted that a channel variation estimating method includes a method for measuring a reception level of received signal by the receiving apparatus (not shown), which is mounted on a base station apparatus with the transmitting apparatus 100, to perform estimation based on the measured result.

The symbol rate determining section 102 determines a symbol rate based on the estimated channel variation quantity. Then, the symbol rate determining section 102 outputs a signal indicative of the determined symbol rate to a frame structuring section 103, a baseband modulating section 104, a band variable filter 105, and a synthesizer 106.

The frame structuring section 103 performs frame structuring process in which a frame length is determined based on the determined symbol rate, transmitting data is divided into frames, and a control signal such as a pilot symbol and the like is inserted into each frame.

The baseband modulating section 104 modulates an output signal of the frame structuring section 103 to a baseband signal based on the determined symbol rate. The band variable filter 105 forms a filter based on the determined symbol rate, and restricts a transmitting band of an output signal of the baseband modulating section 104.

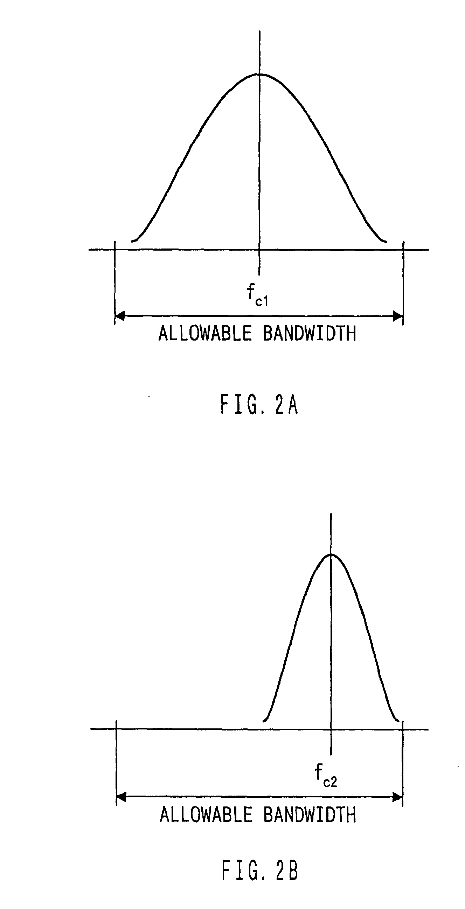

The synthesizer 106 controls a central frequency of a carrier wave based on the determined symbol rate, and outputs the carrier wave of the corresponding central frequency to a multiplying section 107. Here, as illustrated in the frequency band of FIGS. 2A and 2B, the synthesizer 106 makes a central frequency fc2 where the symbol rate is low different from a central frequency fc1 where the symbol rate is high to be tilted toward one side of an allowable bandwidth to which a frequency band is allocated. This makes it possible to improve frequency use efficiency as an overall system.

It is noted that FIG.2A indicates the frequency band when the symbol rate is high, and FIG. 2B indicates the frequency band when the symbol rate is low.

The multiplying section 107 multiplies the output signal of a band variable filter 105 by the carrier wave outputted from the synthesizer 106. A BPF (Band Pass Filter) 108 passes only an output signal component contained in a given frequency band among output signal components of the multiplying section 107. A transmitting antenna 109 radio transmits an output signal of BPF 108 to the receiving apparatus 200.

In the receiving apparatus 200 illustrated in FIG. 1, a receiving antenna 201 receives a signal transmitted from the transmitting apparatus 100. BPF 202 passes only a component contained in a given frequency band among output signal components received by the receiving antenna 201.

A symbol rate detecting section 203 detects a symbol rate of the received signal, and outputs a signal indicative of the symbol rate to a synthesizer 204, a band variable filter 206, a baseband demodulating section 207, and an adaptive equalizer 208. As a method for detecting the symbol rate, there is a method in which the transmitting apparatus 100 multiplexes information of the symbol rate into transmitting data to detect information of symbol rate fro the demodulated received signals, and a method in which the transmitting apparatus 100 demodulates the received signals with a symbol rate as a candidate to estimate a symbol rate from the demodulation result.

The synthesizer 204 controls a central frequency of a carrier wave based on the detected symbol rate, and outputs the carrier wave of the corresponding central frequency to a multiplying section 205. The multiplying section 205 multiplies the output signal of BPF 202 by the carrier wave outputted from the synthesizer 204.

The band variable filter 206 forms a filter based on the detected symbol rate, and restricts the band of an output signal of the multiplying section 205 to generate a baseband signal. A baseband demodulating section 207 demodulates the baseband signal outputted from the band variable filter 206 based on the detected symbol rate.

An adaptive equalizer 208 performs equalizing process in which the waveform of the output signal of the baseband demodulating section 207 is shaped to reduce influence of interference between signals, and extracts received signal. Even if a delay wave exists, the channel estimation is performed to make it possible to estimate the corresponding delay wave and equalize it if the delay wave is within an equalization-capable range.

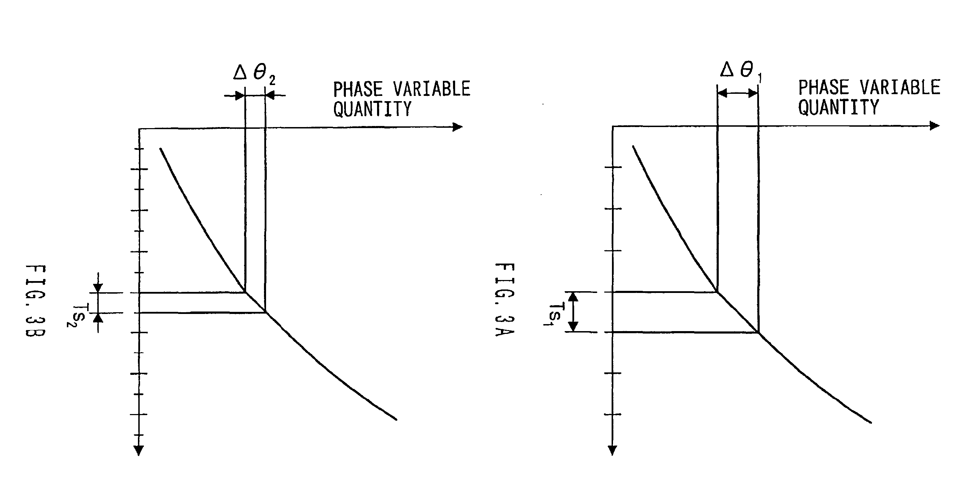

An explanation will be next given of the relationship between the symbol rate and the channel variation using FIGS. 3A and 3B. A horizontal axis in each of FIGS. 3A and 3B indicates time, and a vertical axis is a phase variable quantity. FIG. 3A shows a case in which the symbol rate is low, and FIG. 3B shows a case in which the symbol rate is high.

In the case where the symbol rate is low as illustrated in FIG. 3A, transmitting time Ts1 per one symbol becomes long and a phase variable quantity Δ θ 1 becomes large during this time. While, in the case where the symbol rate is high as illustrated in FIG. 3B, transmitting time Ts2 per one symbol becomes short and a phase variable quantity Δ θ 2 becomes small during this time. Though the above explained the phase variable quantity of the channel, the same can be applied to time variation relating to amplitude.

Thus, since the symbol rate is increased to lessen the channel variable quantity relatively, the symbol rate of the transmitting signal is increased when the channel variable quantity is large, making it possible for the adaptive equalizer of the receiving apparatus to hold sufficient following performance.

Similarly, since the symbol rate is increased to delay variations in time relatively, it is possible to compensate for variations in time in connection with processing such as synchronous detection of the receiving apparatus, delay detection, and the like. It is also possible to compensate for variations in time in connection with phase rotation due to a frequency offset.

Here, it is assumed that the symbol rate determining section 102 determines a symbol rate such that the product of transmitting time Ts per one symbol, namely, the reciprocal of symbol rate and the channel variable quantity fD becomes a constant value. This makes it possible to determine an appropriate symbol rate by a simple calculation processing.

Moreover, since the signal can be transmitted for a short time when the symbol rate is high, the transmitting apparatus 100 may transmit the signal in only a section with a high reception level.

This makes it possible to reduce power consumption and to increase channel use efficiency as an overall system.

### (Second embodiment)

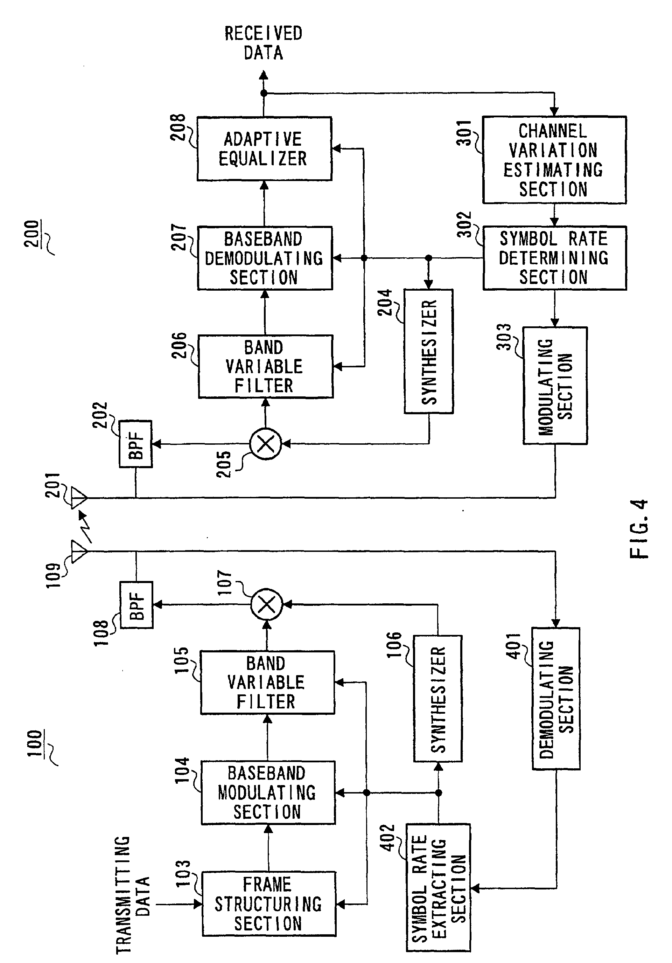

FIG. 4 is a block diagram illustrating the configuration of the transmitting apparatus and that of the receiving apparatus according to a second embodiment of the present invention. In the transmitting apparatus and the receiving apparatus illustrated in FIG. 4, the same reference numerals as those of FIG. 1 are added to the configuration parts common to FIG. 1, and the explanation is omitted.

In FIG. 4, the transmitting apparatus 100 adopts the configuration in which the channel variation estimating section 101 and symbol rate determining section are deleted from FIG. 1 and a demodulating section 401 and a symbol rate extracting section 402 are added to FIG. 1. Moreover, the receiving apparatus 200 adopts the configuration in which the symbol rate detecting section 203 is deleted from FIG. 1 and a channel variation estimating section 301, a symbol rate determining section 302 and a demodulating section 303 are added to FIG. 1. In FIG. 4, it is noted that the antenna 109 and the antenna 201 serve as both a transmitting antenna and a receiving antenna.

The channel variation estimating section 301 estimates a channel variable quantity of received signals, and outputs a signal indicative of a channel variable quantity to the symbol rate determining section 302. The symbol rate determining section 302 determines a symbol rate based on the estimated channel variable quantity, and outputs a signal indicative of a symbol rate to the demodulating section 303. The demodulating section 303 demodulates the signal indicative of the symbol rate and transmits it to the antenna 201.

A demodulating section 401 demodulates a signal indicative of a symbol rate received by the antenna 109,and outputs it to a symbol rate extracting section 402. The symbol rate extracting section 402 extracts the symbol rate from the demodulated signal, and outputs a signal indicative of the extracted symbol rate to the frame structuring section 103, the baseband modulating section 104, the band variable filter 105, and the synthesizer 106.

Thus, the receiving apparatus determines the symbol rate and the transmitting apparatus transmits transmitting data in accordance with the symbol rate determined by the receiving apparatus. This makes it possible to transmit the symbol rate at which the receiving apparatus can decode easiest.

In the case where the receiving apparatus 200 is integral with the transmitting apparatus, information indicative of the symbol rate outputted from the symbol rate determining section 302 may be multiplexed into transmitting data to be transmitted.

### (Third embodiment)

The first and second embodiments explained the case in which the symbol rate determining section 102 or the symbol rate determining section 302 determined the symbol rate of transmitting data based on only the channel variable quantity.

However, when the symbol rate is increased even in the case where the same delay wave is used, the number of delay symbols is relatively increased and the number of delay symbols, which can be equalized by the adaptive equalizer, is fixed by the number of taps of the adaptive equalizer. For this reason, in the case where the symbol rate continues to be increased, the delay wave exceeding the equalization-capable range exists, causing the problem in which performance of the adaptive equalizer is deteriorated.

For example, a delay wave with 1*µ*s existing in the radio channel is a delay wave of one symbol delay when the symbol rate is 1Msps and a delay wave of two symbol delay when the symbol rate is 2Msps.

In the case where the adaptive equalizer with 5 taps is used, the delay wave up to 4-symbol delay can equalized but the delay wave with more than 4 symbol delay cannot be equalized.

Namely, in the case where the delay wave with 1 *µ*s exists, delay time is within 4 symbols when the symbol rate is less than 4Msps, so that the adaptive equalizer can equalize the corresponding delay wave. However, when the symbol rate is more than 4Msps, the adaptive equalizer cannot equalize the corresponding delay wave and performance of the adaptive equalizer is deteriorated.

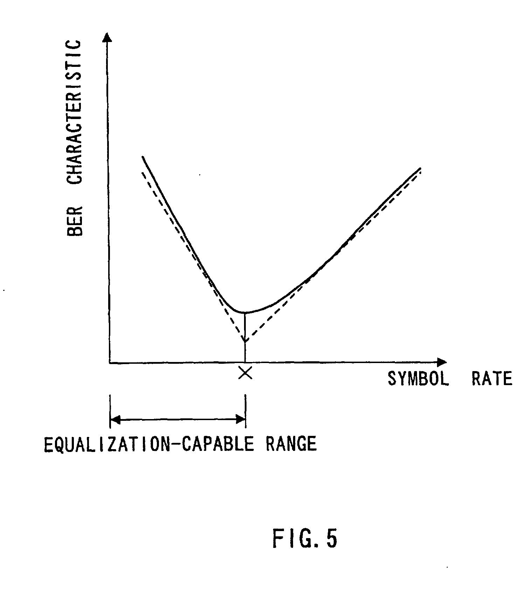

FIG. 5 is a view illustrating the relationship between the symbol rate and an error rate (BER) characteristic under environment where a channel variation with a predetermined quantity and a delay wave with a predetermined delay time exist.

As illustrated in FIG.5, when the number of delay symbols of the delay wave is within the equalization-capable range, the channel variable quantity due to fading relatively becomes small with an increase in the symbol rate, so that the error rate characteristic is improved. While, when the number of delay symbols of the delay wave exceeds the equalization-capable range, the error rate characteristic is deteriorated by influence of the delay wave with the increase in the symbol rate.

Accordingly, the third embodiment determines an optimal symbol rate X whose error rate becomes minimum by the channel variable quantity and the delay time of the delay wave.

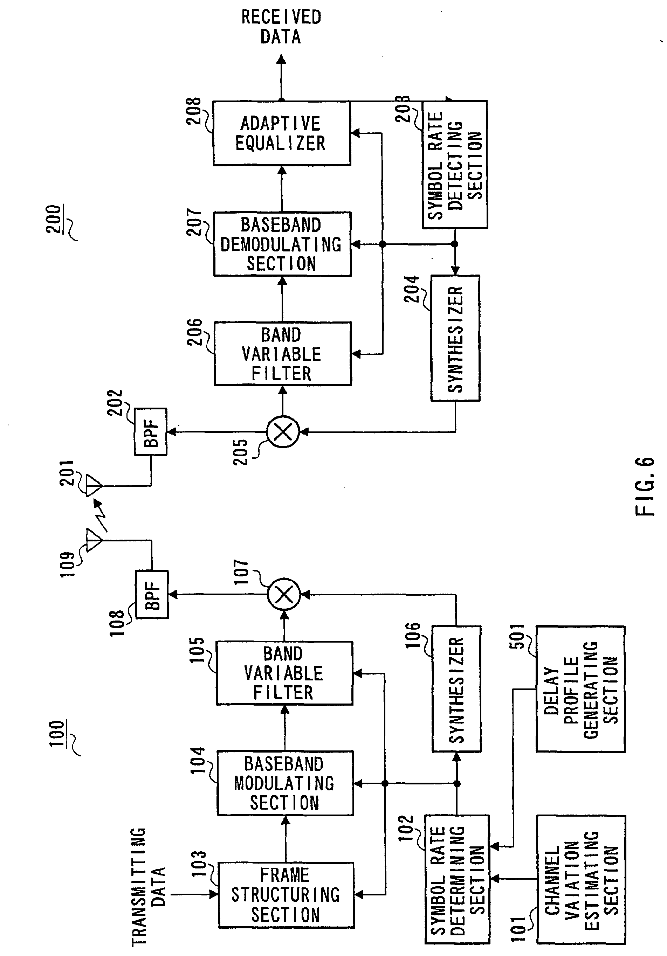

FIG.6 is a block diagram illustrating the configuration of the transmitting apparatus and that of the receiving apparatus according to a second embodiment of the present invention. In the transmitting apparatus and the receiving apparatus illustrated in FIG. 6, the same reference numerals as those of FIG. 1 are added to the configuration parts common to FIG. 1, and the explanation is omitted.

In FIG. 6, the receiving apparatus 200 has the same configuration as that of FIG.1, and the transmitting apparatus 100 adopts the configuration in which a delay profile generating section 501 is added to FIG.1.

The delay profile generating section 501 generates a delay profile of the signal received by the receiving apparatus (not shown) mounted on the base station apparatus together with the transmitting apparatus 100, and outputs the generated delay profile to the symbol rate determining section 102.

The symbol rate determining section 102 holds a reference table that provides a symbol rate whose error rate becomes minimum from the channel variable quantity and time delay of the delay wave. Then, the symbol rate determining section 102 inputs the channel variable quantity from the variation estimating section 101, and inputs the delay profile from the delay profile generating section 501, and determines a symbol rate based on the reference table.

This determined symbol rate is an optimal symbol rate at which the receiving apparatus 200 can decode easiest, and the receiving apparatus 200 can keep the communication quality satisfactory.

Moreover, a table with consideration given to not only delay time but also a pass model in which delay time of the delay wave of each pass and the level are modeled is prepared, and this makes it possible to select an optimal symbol rate at which the receiving apparatus 200 can decode easiest more accurately.

Additionally, as illustrated in the second embodiment, the receiving apparatus determines the symbol rate and the transmitting apparatus can transmit transmitting data in accordance with the symbol rate determined by the receiving apparatus. In this case, the channel varying section and the delay profile generating section are added to the receiving apparatus 200.

As is obvious from the aforementioned explanation, according to the transmitting apparatus and the transmitting method of the present invention, the symbol rate can be adaptively changed in accordance with the measured channel variable quantity, and this makes it possible for the adaptive equalizer to hold sufficient following performance and to maintain communication quality satisfactory without increasing the number of apparatus components even in the case where the channel variation is considerably fast due to high-speed fading.

This application is based on the Japanese Patent Application No. HEI11-275688 filed on September 29, 1999, entire content of which is expressly incorporated by reference herein.

### Industrial Applicability

The present invention is suitable for use in a base station apparatus and a communication terminal apparatus in a mobile communication system such a cellular phone.

## Claims

1. A transmitting apparatus comprising:
symbol rate determining means for determining a symbol rate of a transmitting signal based on a channel variable speed between transmission and reception; and
transmitting means for radio transmitting data based on said symbol rate.

2. The transmitting apparatus according to claim 1, wherein said symbol rate determining means determines a symbol rate such that the product of transmitting time per one symbol and the channel variable speed becomes a constant value.

3. The transmitting apparatus according to claim 1, wherein said symbol rate determining means determines a symbol rate whose error rate becomes minimum based on the channel variable speed and relative delay time of multipaths.

4. The transmitting apparatus according to claim 1, wherein said symbol rate determining means determines a symbol rate whose error rate becomes minimum based on the channel variable speed and a delay profile.

5. The transmitting apparatus according to claim 1, further comprising carrier wave frequency controlling means for controlling a central frequency of a carrier wave based on the symbol rate.

6. The transmitting apparatus according to claim 1, wherein said transmitting means transmits a signal only the period when received signal level is high.

7. The transmitting apparatus according to claim 1, wherein said symbol rate determining means extracts information of the symbol rate from a signal transmitted from the other end of communication.

8. A receiving apparatus comprising:
receiving means for extracting received data from a signal transmitted from the transmitting apparatus described in claim 7;
channel variation estimating means for estimating a channel variation based on the received data;
symbol rate determining means for determining a symbol rate based on the estimated channel variation; and
transmitting means for transmitting a signal indicative of the determined symbol rate to said transmitting apparatus.

9. A base station apparatus having a transmitting apparatus thereon, said transmitting apparatus comprising:
symbol rate determining means for determining a symbol rate of a transmitting signal based on a channel variable speed between transmission and reception; and
transmitting means for radio transmitting data based on said symbol rate.

10. A base station apparatus having a receiving apparatus thereon, said receiving apparatus comprising:
receiving means for extracting received data from a signal transmitted from the transmitting apparatus described in claim 7;
channel variation estimating means for estimating a channel variation based on the received data;
symbol rate determining means for determining a symbol rate based on the estimated channel variation; and
transmitting means for transmitting a signal indicative of the determined symbol rate to said transmitting apparatus.

11. A communication terminal apparatus having a transmitting apparatus thereon, said transmitting apparatus comprising:
symbol rate determining means for determining a symbol rate of a transmitting signal based on a channel variable speed between transmission and reception; and
transmitting means for radio transmitting data based on said symbol rate.

12. A communication terminal apparatus having a receiving apparatus thereon, said receiving apparatus comprising:
receiving means for extracting received data from a signal transmitted from the transmitting apparatus described in claim 7;
channel variation estimating means for estimating a channel variation based on the received data;
symbol rate determining means for determining a symbol rate based on the estimated channel variation; and
transmitting means for transmitting a signal indicative of the determined symbol rate to said transmitting apparatus.

13. A transmitting method wherein a channel variable speed between transmission and reception is detected to increase a symbol rate of a transmitting signal in an increase in said channel variable speed.

14. A transmitting method wherein a channel variable speed between transmission and reception is detected to determine a symbol rate of a transmitting signal having the highest error rate characteristic from the channel variable speed and relative delay time of multipaths.

15. A transmitting method wherein a channel variable speed between transmission and reception is detected to determine a symbol rate of a transmitting signal having the highest error rate characteristic from the channel variable speed and a delay profile.
